# EUROPÄISCHE PATENTANMELDUNG

(11) **EP 2 295 187 A2**
(43) Veröffentlichungstag der Anmeldung: **16.03.2011**
(21) Anmeldenummer: 10176428.0
(22) Anmeldetag: 13.09.2010
(51) Int. Cl.: B23K 11/30

(54) **Vorschubeinheit eines Kappenfräsers zum Befräsen des Schweißbereichs von Punktschweißelektroden**

(30) Priorität: 11.09.2009 DE 102009029393; 14.09.2009 DE 102009029433
(71) Anmelder: AEG SVS Schweisstechnik GmbH, 45475 Mülheim/Ruhr (DE)
(72) Erfinder: Holdmann, Dirk, 51149 Köln (DE); Schmidt, Harald, 45144 Essen (DE)
(74) Vertreter: Bauer Vorberg Kayser Patentanwälte

(57) **Zusammenfassung**

Die Vorschubeinheit eines Kappenfräsers (20) zum Befräsen des Schweißbereichs von Punktschweißelektroden (22) weist auf ein Grundgestell (24), das eine Schwenkachse (26) hat, einen Schwenkarm (28), der um die Schwenkachse (26) schwenkbar mit dem Grundgestell (24) verbunden ist und zwischen einer eingeschwenkten Position und einer Ruheposition schwenkbar ist, eine Stellvorrichtung (30), die zwischen dem Grundgestell (24) und dem Schwenkarm (28) angeordnet ist, ein Basisteil (32), das am Schwenkarm (28) verstellbar angeordnet ist, wobei Befestigungsmittel (34) vorgesehen sind, die eine Verbindung des Basisteils (32) am Schwenkarm (28) in unterschiedlichen Positionen ermöglichen, ein Vorschubteil (36), das den Kappenfräser (20) trägt und gegenüber dem Basisteil (32) zwischen einer aktiven Position und einer passiven Position verstellbar ist, und einen Antrieb (38), der zwischen dem Basisteil (32) und dem Vorschubteil (36) angeordnet ist.

## Beschreibung

Die Erfindung bezieht sich auf eine Vorschubeinheit eines Kappenfräsers zum Befräsen des Schweißbereichs von Punktschweißelektroden.

Kappenfräser werden häufig in der Automobilproduktion eingesetzt, sie sind üblicherweise entlang einer Montagestrecke für Karosserieteile angeordnet und den dort vorgesehenen Schweißrobotern zugeordnet. Die Schweißroboter haben die Aufgabe, durch Punktschweißung Karosserieblechteile miteinander zu verbinden. Hierzu sind sie typischerweise mit Schweißzangen versehen, deren Zangenbacken mit je einer Punktschweißelektrode ausgerüstet sind. Die Schweißroboter können mehr oder weniger stationär sein, sie können aber auch für vielfältige Bewegungen ausgelegt sein. Sie brauchen einen ausreichenden Freiraum.

Während des Betriebes nutzen sich die Punktschweißelektroden ab. Im Schweißbetrieb tritt insbesondere eine Veränderung der Elektrodenkappen auf. Zumeist bilden sich Wülste am Rand der Elektrodenkappen, die eine Vergrößerung der tatsächlichen Kontaktfläche der Schweißelektrode bewirken. Dies aber führt zu veränderten Schweißbedingungen, da nun die Fläche des Schweißpunktes vergrößert ist. Daneben kann sich beim Verschweißen von verzinkten Karosserieflächen an den Elektrodenkappen eine Verunreinigung, beispielsweise Zinkoxid, anlagern, sie bildet einen ohmschen Widerstand.

Durch die Kappenfräser ist es möglich, die Wirkflächen der Elektroden jeweils wieder aufzuarbeiten. Derartige Kappenfräser sind beispielsweise aus EP 958092 B1, US 6,863597 B2, US 6,666631 B2, DE 19825771 A1 und DE 4213571 C2 bekannt.

Um die Elektroden fräsen zu können, muss sich ein Kappenfräser in Nähe eines Schweißroboters bzw. einer Schweißzange und in geeigneter Position hierzu befinden. Ist das Aufarbeiten der Elektroden abgeschlossen, stört der Kappenfräser, da er sich im Bewegungsbereich des Schweißroboters befindet. Es ist daher in vielen Installationen bereits so vorgesehen, dass der Kappenfräser mit einer Einschwenkvorrichtung verbunden ist, die ihn normalerweise aus dem Arbeitsbereich des Schweißroboters heraus bewegt und nur für eine Fräsbehandlung in diesen Arbeitsbereich hineinbewegt. Der Kappenfräser muss präzise und sicher anzusteuern sein. Die Bewegung, die er durchführt, muss sich den örtlichen Bedingungen anpassen können und sicher, ausreichend schnell und zuverlässig durchführbar sein.

All dies ist vor dem Hintergrund zu betrachten, dass die Fertigung von Kraftfahrzeugen, insbesondere Karosseriegruppen, ein komplexer Vorgang ist, der möglichst wenig unterbrochen werden soll, weil Betriebsstörungen Produktionsausfälle bedeuten sind und viele Nacharbeiten nach sich ziehen.

Beim Befräsen des Schweißbereichs der Punktschweißelektroden wird etwas Material abgetragen. Üblicherweise sind dies maximal 1/10 bis höchstens 2/10 mm. Durch das Fräsen ändert sich die Geometrie der Punktschweißelektrode. Es sind nun Schweißzangen mit Punktschweißelektroden bekannt, die nach jedem Fräsvorgang eine Initialisierung durchführen. Weiterhin wird es gewünscht, gewisse Parameter der Punktschweißzangen zu erfassen, beispielsweise die Schließkraft, mit der die Punktschweißelektroden zusammengepresst werden, der optische Zustand der Kappe der Punktschweißelektrode, die Form der gefrästen Punktschweißelektrode usw.. Hierfür werden Sensoren eingesetzt, zu den Sensoren gehören beispielsweise eine Kraftmessdose, eine Kamera, ein Lichtsensor, eine Messstation, insbesondere eine optische oder geometrische Messstation, die die Abmessungen optisch oder mechanisch erfasst.

Hiervon ausgehend liegt der Erfindung die Aufgabe zugrunde, die Vorschubeinheit der eingangs genannten Art dahingehend weiterzubilden, dass sie auch für Schweißzangen geeignet ist, die eine Initialisierung durchführen und/oder auch für den Einsatz von Sensoren ausgelegt ist.

Diese Aufgabe wird gelöst durch eine Vorschubeinheit eines Kappenfräsers zum Befräsen des Schweißbereichs von Punktelektroden die ein Grundgestell, das eine Schwenkachse hat, einen Schwenkarm, der um die Schwenkachse schwenkbar mit dem Grundgestell verbunden ist und zwischen einer eingeschwenkten Position und einer Ruheposition schwenkbar ist, eine Stellvorrichtung, die zwischen dem Grundgestell und dem Schwenkarm angeordnet ist, ein Basisteil, das am lösbar angeordnet ist, wobei Befestigungsmittel vorgesehen sind, die eine Verbindung des Basisteils am Schwenkarm in unterschiedlichen Positionen ermöglichen, ein Vorschubteil, das den Kappenfräser trägt und gegenüber dem Basisteil zwischen einer aktiven Position und einer passiven Position verstellbar ist, und einen Antrieb, der zwischen dem Basisteil und dem Vorschubteil angeordnet ist, aufweist.

Bei dieser Vorschubeinheit wird der Kappenfräser nicht mehr nur durch den Schwenkarm bewegt, sondern er ist zusätzlich auch gegenüber dem Schwenkarm bewegbar, indem das Vorschubteil relativ zum Basisteil verschoben wird. Das Basisteil selbst ist am Schwenkarm festgelegt und bewegt sich mit diesem.

Dabei ist es in einer Verbesserung nicht erforderlich, den vollständigen Kappenfräser am Vorschubteil anzuordnen, vielmehr genügt es, eine Fräseinrichtung des Kappenfräsers am Vorschubteil anzuordnen, während die restlichen Teile, insbesondere eine Spansammeleinrichtung, am Schwenkarm oder am Basisteil angeordnet sein können.

Die Erfindung ermöglicht es, dass bei eingeschwenktem Schwenkarm der Kappenfräser zwischen der aktiven Position, in der er eine Fräsung durchführen kann, und einer passiven Position, in der er außerhalb des Bewegungsbereichs der Punktschweißelektrode ist, bewegt werden kann. Hierzu wird das Vorschubteil verschoben. Einer Bewegung des Schwenkarms bedarf es hierzu nicht. Damit ist die Bewegung der relativ schweren Massen dem Schwenkarm zugeordnet, während deutlich leichtere Massen vom Vorschubteil bewegt werden müssen. Auch ist die Bewegung mit dem größeren Weg dem Schwenkarm zugeordnet. Auf diese Weise lässt sich eine präzisere Einstellung erreichen. Durch das Vorschubteil ist es möglich, Sensoren in eine aktive Stellung zu bringen, so dass diese die Punktschweißelektroden sensorisch erfassen können. Derartige Sensoren sind bereits oben genannt worden. Die Sensoren können am Vorschubteil selbst angeordnet sein, sie können aber auch an mindestens einem Tragarm vorgesehen sein, der entweder am Vorschubteil schwenkbar angelenkt ist oder am Basisteil schwenkbar angelenkt ist. Anstelle eines Tragarms können auch andere, technisch gleichwertige Lösungen eingesetzt werden, z.B. ein in einer Linearführung gegenüber dem Basisteil oder dem Vorschubteil verschiebbarer Tragarm oder eine Anordnung eines über eine Parallelogrammführung mit dem Basisteil oder mit dem Vorschubteil verbundenen Tragarms und dergleichen.

Durch die Erfindung wird eine umfassendere Inspektion der Punktschweißelektroden möglich. Es lassen sich diejenigen Sensoren anbringen, die vom jeweiligen Nutzer gewünscht werden. Die Vorschubeinheit lässt sich so auslegen, dass durch Schwenken des Tragarms stets und unabhängig von der jeweiligen Position des Vorschubteils und/oder eines zusätzlichen Tragarmes immer erreicht wird, dass der Tragarm in die Ruheposition gebracht werden kann, ohne dass es zu einer Kollision mit den Punktschweißelektroden kommt.

In einer bevorzugten Weiterbildung hat der Schwenkarm einen unrunden Querschnitt. Dadurch wird erreicht, dass in einer Ebene quer zum Schwenkarm eine formschlüssige Verbindung zwischen Basisteil und Schwenkarm erreichbar ist. Dadurch wird einem Verstellen entgegengewirkt.

Weitere Vorteile und Merkmale der Erfindung ergeben sich aus den übrigen Ansprüchen sowie der nun folgenden Beschreibung eines nicht einschränkend zu verstehenden Ausführungsbeispiels der Erfindung, das unter Bezugnahme auf die Zeichnung im Folgenden näher erläutert wird. In dieser Zeichnung zeigen:
- Fig. 1:: eine Seitenansicht der Vorschubeinheit mit Kappenfräser,

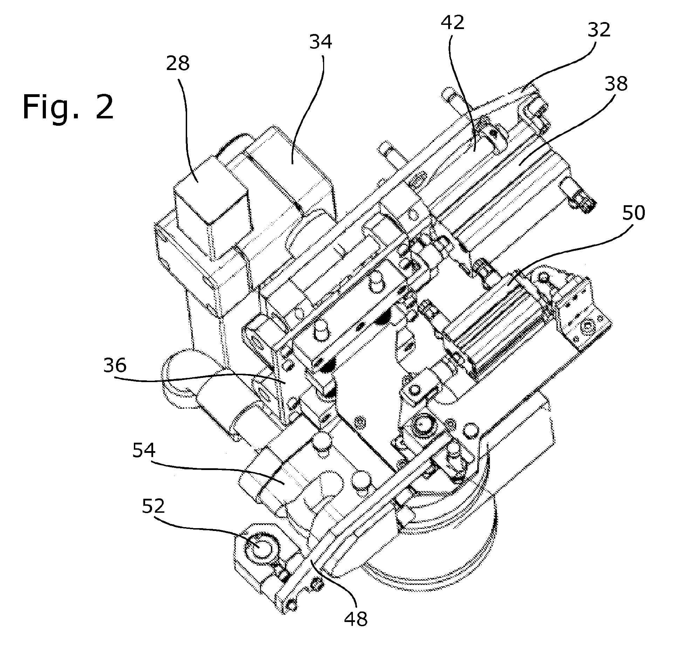

- Fig. 2:: eine perspektivische Darstellung der Vorschubeinheit nach Figur 1, jedoch ohne ein Grundgestell und ohne eine Stellvorrichtung, bei Ansicht von schräg oben,
- Fig. 3:: eine Draufsicht auf die Anordnung gemäß Figur 2, zusätzlich sind strichpunktiert eine aktive Position des Vorschubteils und eine passi- ve Schwenkposition des Schwenkarms eingezeichnet,

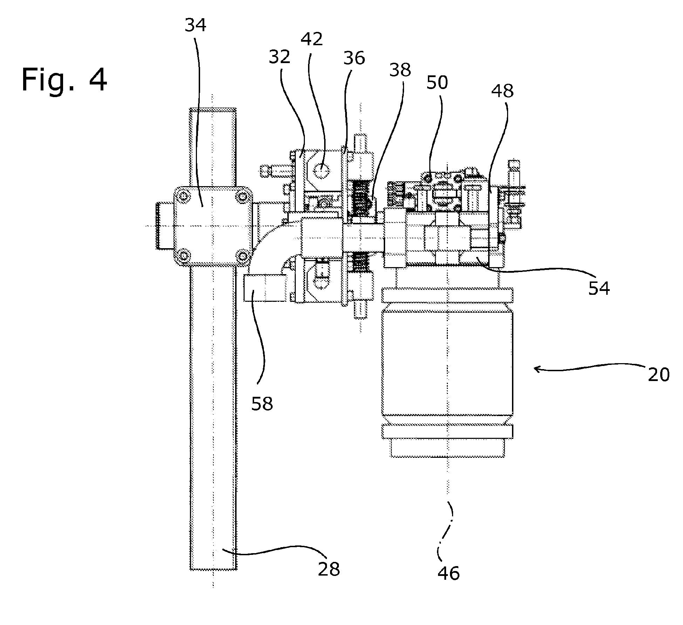

- Fig. 4:: eine Stirnansicht auf die Anordnung entsprechend dem Pfeil IV in Figur 3, jedoch ohne strichpunktierte Zusätze,

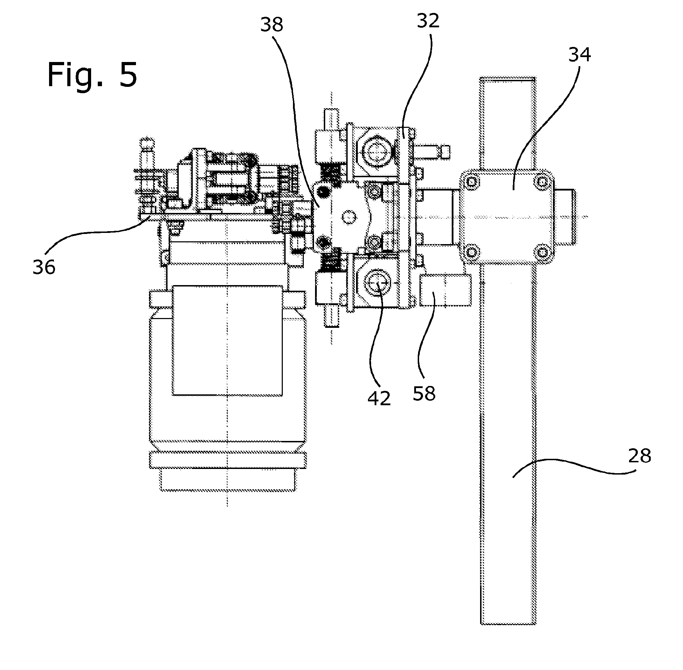

- Fig. 5:: eine Rückansicht der Anordnung entsprechend dem Pfeil V in Figur 3, jedoch ohne strichpunktierte Zusätze, und
- Fig. 6:: eine Seitenansicht auf die Anordnung gemäß Figur 3 entsprechend dem Pfeil VI in Figur 3, jedoch ohne die strichpunktierten Zusätze.

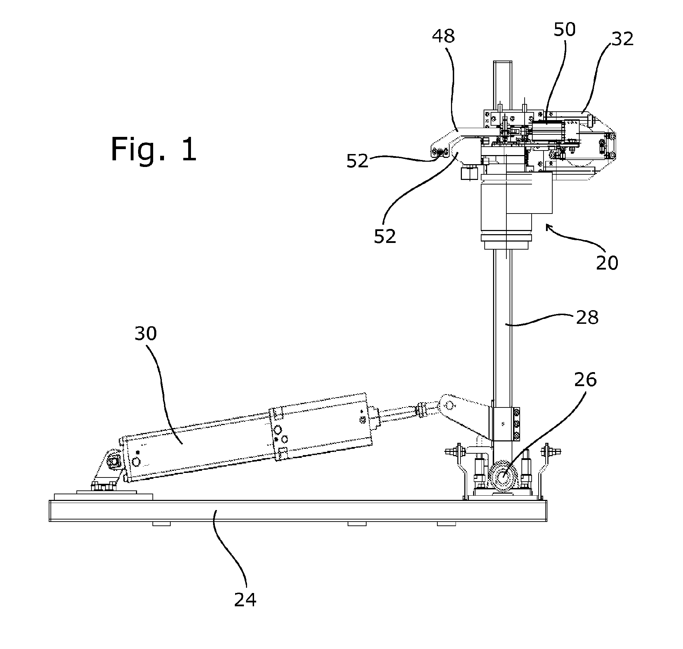

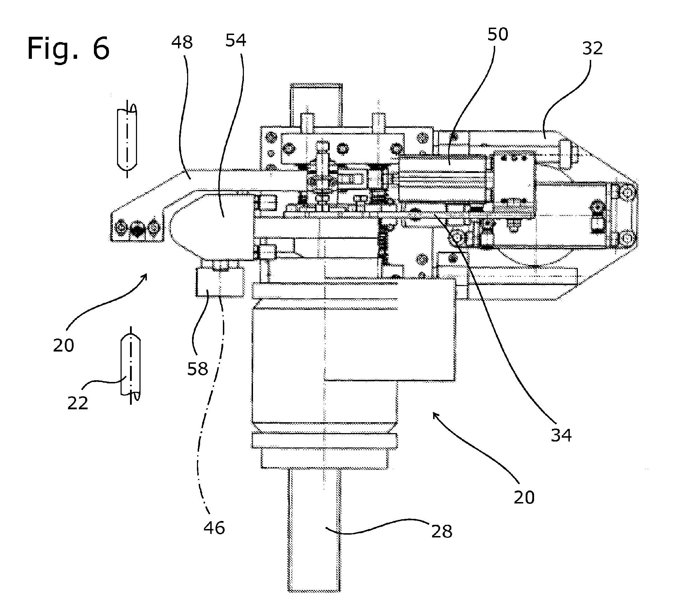

In Figur 1 ist die komplette Vorschubeinheit gezeigt. Sie hat einen Kappenfräser 20, der zum Befräsen des Schweißbereichs von Punktschweißelektroden 22 (siehe Figur 6) ausgelegt ist. Die Vorschubeinheit hat weiterhin ein Grundgestell 24, das nach dem Stand der Technik ausgebildet ist. Dieses Grundgestell 24 hat eine Schwenkachse 26. Es ist ein Schwenkarm 28 vorgesehen, der um die Schwenkachse 26 schwenkbar mit dem Grundgestell 24 verbunden ist, er kann zwischen einer eingeschwenkten Position, wie sie Figur 1 zeigt, und einer Ruheposition verschwenkt werden. In der Ruheposition ist der Schwenkarm 28 außerhalb des Bereichs der Punktschweißelektroden 22. Die Vorschubeinheit hat weiterhin eine Stellvorrichtung 30, die zwischen dem Grundgestell 24 und dem Schwenkarm 28 angeordnet ist und die beschriebene Schwenkbewegung zwischen den beiden Positionen durchführen kann. Ihr ist eine nicht näher dargestellte Steuereinrichtung 40 zugeordnet.

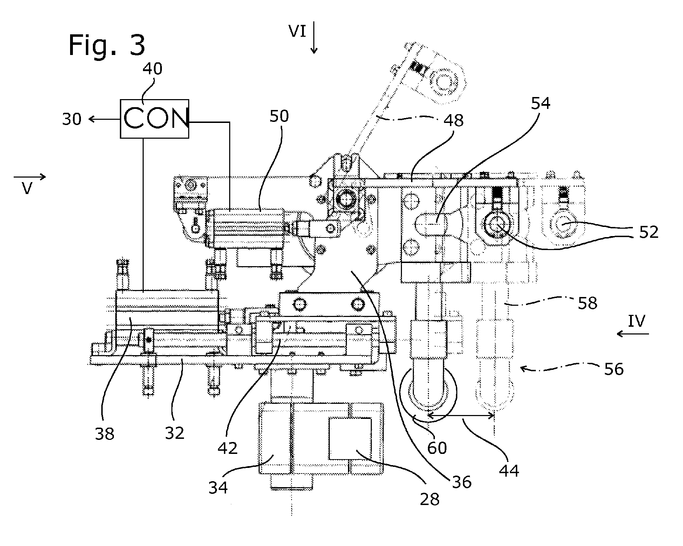

Die Vorschubeinheit hat weiterhin ein Basisteil 32, das am Schwenkarm 28 verstellbar angeordnet ist. Der Schwenkarm 28 hat unrunden Querschnitt, hier einen quadratischen Querschnitt. Es sind Befestigungsmittel 34 vorgesehen, über die das Basisteil 32 lösbar mit dem Schwenkarm 28 verbunden ist. Auf diese Weise können unterschiedliche Positionen entlang der Länge des Schwenkarms 28 eingestellt werden. Die Befestigungsmittel 34 sind in einer Weiterbildung das Basisteil 32 so ausgelegt, dass das Basisteil 32 in unterschiedlichen Winkelpositionen zur Achse des Schwenkarms 28 eingestellt werden kann. Figur 3 zeigt eine mögliche Winkelposition.

Die Vorschubeinheit hat weiterhin ein Vorschubteil 36, das gegenüber dem Basisteil 32 zwischen einer aktiven Position und einer passiven Position verstellbar ist. Weitere Verstellmöglichkeiten sind nicht ausgeschlossen. Figur 3 zeigt die aktive Position des Vorschubteils 36 in strichpunktierten Linien, die passive Position ist mit durchgezogenen Linien dargestellt. Schließlich ist ein Antrieb 38 vorgesehen, er ist zwischen Basisteil 32 und Vorschubteil 36 angeordnet und ist dafür zuständig, die Bewegung des Vorschubteils 36 zwischen den beiden Positionen, die in Figur 3 dargestellt sind, zu bewirken. Auch dieser Antrieb 38 ist mit der Steuereinrichtung 40 verbunden.

Im gezeigten Ausführungsbeispiel ist zwischen Basisteil 32 und Vorschubteil 36 eine Linearführung 42 angeordnet. Sie verwendet zwei mit dem Basisteil 34 verbundene, parallele Wellen. Sie werden von Gleitteilen umgriffen, die mit einer Platte verbunden sind. Diese Platte bildet den Hauptteil des Vorschubteils 36. An dieser Platte ist der Kappenfräser 20 befestigt. Auf dieser Platte ist auch der Antrieb 38 angeordnet.

Anstelle einer Linearführung können auch andere Führungsmittel vorgesehen sein. So kann beispielsweise am Basisteil 32 eine Schwenkachse vorgesehen sein, um die das Vorschubteil 36 verschwenkt werden kann. Es ist auch eine Parallelogrammführung mit zwei Parallelogrammarmen zwischen Basisteil 32 und Vorschubteil 36 möglich.

Im gezeigten Ausführungsbeispiel ermöglicht die Linearführung 42 eine Verschiebung des Vorschubteils 36 entlang einer Verschiebungsstrecke 44. Diese Verschiebungsstrecke 44 ist rechtwinklig zu einer Rotationsachse 46 des Kappenfräsers 22. In der Darstellung nach Figur 6 befindet sich das Vorschubteil 36 in seiner passiven Position. Damit ein Fräsvorgang möglich ist, muss das Vorschubteil 36 erst in die aktive Position gebracht werden, wie es in Figur 3 mit strichpunktierten Linien dargestellt ist. Dann kann ein Fräsen erfolgen. In der Position gemäß Figur 6, also der inaktiven Position, befindet sich der Kappenfräser 22 außerhalb des Raums zwischen den beiden Punktschweißelektroden 22.

Am Vorschubteil 36 ist ein Tragarm 48 schwenkbar angeordnet. Er ist um eine Schwenkachse schwenkbar, die parallel zur Rotationsachse 46 verläuft. Er kann zwischen einer aktiven Schwenkposition, die Figur 3 in durchgezogenen Linien darstellt, wobei die Position des Vorschubteils 36 ebenfalls mit durchgezogenen Linien gültig ist, und einer passiven Schwenkposition verschwenkt werden, sie ist strichpunktiert in Figur 3 für den gleichen Zustand des Vorschubteils 36 dargestellt. Der Schwenkwinkel liegt bei etwa 50 bis 90, vorzugsweise etwa 70°. Es ist ein Schwenkantrieb 50 vorgesehen, der ebenfalls mit der Steuereinrichtung 40 verbunden ist. Über eine Hebevorrichtung erfolgt die Verschwenkbewegung. Auch der Schwenkantrieb 50 ist auf der Platte befestigt.

Anstelle einer Schwenkverbindung zwischen Tragarm 48 und Vorschubteil 36 können auch andere Führungen vorgesehen sein, beispielsweise kann eine lineare Führung zwischen Tragarm 48 und Vorschubteil 36 vorgesehen sein, es ist möglich, hier eine Parallelogrammführung vorzusehen, andere Führungen sind möglich.

Am Tragarm 48 ist ein Sensor 52 angeordnet, in der gezeigten Ausführung handelt es sich um eine Druckmessdose. Sie ist als flache Scheibe ausgeführt, die zylinderähnlich ist, ihre Scheibenachse verläuft parallel zur Rotationsachse 46. In der mit ausgezogenen Strichen gezeigten aktiven Schwenkposition befindet sich der Sensor 52 zwischen den Punktschweißelektroden 22. Werden diese einander genähert, kann die Schließkraft bestimmt werden. Mit Hilfe anderer Sensoren können andere Merkmale erfasst werden.

In einer vereinfachten Ausführung ist es möglich, auf die Schwenkbewegung des Tragarms 48 zu verzichten, und den Tragarm 48 direkt mit dem Vorschubteil 36 zu verbinden bzw. ihn ganz entfallen zu lassen und den Sensor 52 unmittelbar in einem entsprechend ergänzten Vorschubteil 36 anzuordnen. Dadurch können die beiden unten in Figur 3 übereinander gezeigten Schwenkpositionen erreicht werden, es kann aber nicht die rechts in Figur 3 gezeigte, dort strichpunktiert dargestellte Schwenkposition erhalten werden. In der mit ausgezogenen Strichen dargestellten Position gemäß Figur 3 ist der Sensor 52 in seiner aktiven Stellung.

Der Kappenfräser 20 hat eine Fräseinrichtung 54 und eine Spansammeleinrichtung 56. Zur letzterer gehört ein Schlauch 58, der einen Spansammelbehälter 60 mit der Fräseinrichtung 54 verbindet. Dieser Schlauch 58 kann nun entweder flexibel ausgeführt sein, so dass er die aus Figur 3 ersichtliche Bewegung der Fräseinrichtung 54 an einem Ende mitmacht und am anderen Ende, wo er mit dem Spansammelbehälter 60 verbunden ist, stationär bleibt, dort ist er am Schwenkarm 28 festgelegt. Es ist aber auch möglich, den Schlauch 58 aus zwei starren Teilstücken aufzubauen, von denen ein Teilstück mit der Fräseinrichtung 54, wie in Figur 3 dargestellt, und das andere Teil mit dem Spansammelbehälter 60 verbunden ist. Nur in der aktiven Position des Vorschubteils sind beide Schlauchteile miteinander in fluchtender Verbindung, sie werden durch die Schiebebewegung in diese Verbindung gebracht.

Die Anmelderin behält sich vor, Merkmale und Untermerkmale beliebiger Ansprüche miteinander und/oder mit dem Hauptanspruch zu kombinieren. Auch Merkmale und Teilmerkmale aus Sätzen der Beschreibung sind mit den Merkmalen des Anspruchs 1 und/oder Teilmerkmalen oder Merkmalen aus mindestens einem Unteranspruch kombinierbar. Die Unteransprüche sind beliebig mit dem Hauptanspruch kombinierbar, auch im Sinne von Teilmerkmalen.

## Patentansprüche

1. Vorschubeinheit eines Kappenfräsers (20) zum Befräsen des Schweißbereichs von Punktschweißelektroden (22) die aufweist:
- ein Grundgestell (24), das eine Schwenkachse (26) hat,
- einen Schwenkarm (28), der um die Schwenkachse (26) schwenkbar mit dem Grundgestell (24) verbunden ist und zwischen einer eingeschwenkten Position und einer Ruheposition schwenkbar ist,
- eine Stellvorrichtung (30), die zwischen dem Grundgestell (24) und dem Schwenkarm (28) angeordnet ist,
- ein Basisteil (32), das am Schwenkarm (28) verstellbar angeordnet ist, wobei Befestigungsmittel (34) vorgesehen sind, die eine Verbindung des Basisteils (32) am Schwenkarm (28) in unterschiedlichen Positionen ermöglichen,
- ein Vorschubteil (36), das den Kappenfräser (20) trägt und gegenüber dem Basisteil (32) zwischen einer aktiven Position und einer passiven Position verstellbar ist, und
- einen Antrieb (38), der zwischen dem Basisteil (32) und dem Vorschubteil (36) angeordnet ist.

2. Vorschubeinheit nach Anspruch 1, **dadurch gekennzeichnet, dass** das Vorschubteil (36) um eine Schwenkachse (26) schwenkbar am Basisteil (32) angelenkt ist, oder das Vorschubteil (36) in einer Linearführung (42) des Basisteils (32) verschiebbar geführt ist, oder das Vorschubteil (36) über Parallelogrammarme mit dem Basisteil (32) schwenkbar verbunden ist

3. Vorschubeinheit nach Anspruch 1 oder 2, **dadurch gekennzeichnet, dass** der Kappenfräser (20) eine Rotationsachse (46) aufweist, und dass die Rotationsachse (46) quer zur Richtung einer Verschiebungsstrecke des Vorschubteils (36) zwischen der ersten Position und der zweiten Position verläuft.

4. Vorschubeinheit nach einem der vorangegangenen Ansprüche, **dadurch gekennzeichnet, dass** der Kappenfräser (20) sich außerhalb eines Raums zwischen den Punktschweißelektroden (22) befindet, wenn das Vorschubteil (36) sich in der passiven Position befindet.

5. Vorschubeinheit nach einem der vorangegangenen Ansprüche, **dadurch gekennzeichnet, dass** der Kappenfräser (20) sich in einer Fräsposition zwischen den Punktschweißelektroden (22) des Kappenfräsers (20) befindet, wenn sich das Vorschubteil (36) in der aktiven Position befindet.

6. Vorschubeinheit nach einem der vorangegangenen Ansprüche, **dadurch gekennzeichnet, dass** ein Tragarm (48) vorgesehen ist, der am Vorschubteil (36) schwenkbar angeordnet ist und der zwischen einer aktiven Schwenkposition und einer passiven Schwenkposition bewegbar ist, dass an dem Tragarm (48) ein Sensor (52) angeordnet ist, und dass in der aktiven Schwenkposition des Tragarms (48) der Sensor (52) sich in einer aktiven Stellung befindet und eine Eigenschaft der Punktschweißelektroden (22) erfassen kann.

7. Vorschubeinheit nach einem der vorangegangenen Ansprüche, **dadurch gekennzeichnet, dass** der Kappenfräser (20) eine Rotationsachse (46) aufweist, dass die Bewegung des Vorschubteils (36) gegenüber dem Basisteil (32) zwischen der ersten Position und der zweiten Position in einer Bewegungsebene erfolgt, und dass die Rotationsachse (46) rechtwinklig zur Bewegungsebene ist.

8. Vorschubeinheit nach einem der vorangegangenen Ansprüche, **dadurch gekennzeichnet, dass** in der aktiven Position oder in der passiven Position des Vorschubteils (36) der Sensor (52) des Tragarms (48) sich zwischen den Punktschweißelektroden (22) befindet, wenn der Tragarm (48) in der aktiven Schwenkposition ist.

9. Einschwenkvorrichtung nach einem der vorangegangenen Ansprüche, **dadurch gekennzeichnet, dass** der Kappenfräser (20) eine Fräseinrichtung (54) und eine Spansammeleinrichtung (56) aufweist, und dass die Fräseinrichtung (54) am Vorschubteil (36) befestigt ist.

10. Vorschubeinheit nach Anspruch 9, **dadurch gekennzeichnet, dass** die Spansammeleinrichtung (56) am Basisteil (32) oder am Schwenkarm (28) befestigt ist.

11. Vorschubeinheit nach Anspruch 10, **dadurch gekennzeichnet, dass** zwischen Fräseinrichtung (54) und Spansammeleinrichtung (56) entweder eine flexible Schlauchverbindung vorgesehen ist, oder dass eine starre Schlauchverbindung vorgesehen ist, die aus zwei Teilstücken besteht, welche dann miteinander verbunden sind, wenn sich das Vorschubteil (36) in der aktiven Position befindet.
